# EUROPÄISCHE PATENTSCHRIFT

(11) **EP 3 357 636 B1**
(45) Veröffentlichungstag und Bekanntmachung des Hinweises auf die Patenterteilung: **20.04.2022**
(21) Anmeldenummer: 18153222.7
(22) Anmeldetag: 24.01.2018
(51) Int. Cl.: B23Q 1/70, B23Q 15/18, B24B 41/04

(54) **WERKZEUGMODUL ZUR FEINBEARBEITUNG**
TOOL MODULE FOR FINISHING
MODULE D'OUTIL DESTINÉ A LA FINITION

(30) Priorität: 02.02.2017 DE 102017102094
(43) Veröffentlichungstag der Anmeldung: 08.08.2018
(73) Patentinhaber: Nitschke, Steffen, 04319 Leipzig/Althen-Kleinpösna (DE)
(72) Erfinder: Nitschke, Steffen, 04319 Leipzig/Althen-Kleinpösna (DE)
(74) Vertreter: Naeven, Ralf

(56) Entgegenhaltungen:
- DE-A1- 10 354 474
- JP-A- S55 164 464
- US-A- 5 573 443

## Beschreibung

Die Erfindung betrifft ein Werkzeugmodul zur Feinbearbeitung gemäß dem Oberbegriff des Anspruchs 1. Ein solches Werkzeugmodul wird z.B. in Dokument DE 103 54 474 A1 offenbart.

Während die formgebende Bearbeitung, wie z.B. NC-Fräsen oder NC-Erodieren, in hohem Umfang automatisiert werden konnte, erfolgt eine abschließende Oberflächenfeinbearbeitung des Werkstückes in der Regel manuell, z.B. das Feinschleifen, Honen und Polieren. Die manuelle Feinbearbeitung bildet oftmals den letzten Prozessschritt und ist somit entscheidend für die Produktqualität. Dabei hängen die Qualität und der Zeitaufwand ausschließlich vom individuellen Geschick des Handwerkers ab.

Es wurden zur Automatisierung der Feinbearbeitung bisher große Anstrengungen unternommen, wobei mit den entwickelten Lösungen lediglich einfache, leicht gekrümmte Oberflächen automatisiert geschliffen, gehont und poliert werden können. Vor diesem Hintergrund besteht speziell aus Sicht der Endanwender der Bedarf, neue Werkzeugsysteme für die Bearbeitung komplexer Geometrieelemente bereitzustellen. Aus dem Artikel "Hochglänzende Freiformflächen auf Stahlwerkzeugen" (F. Klocke et al.; wt Werkstatttechnik online Jahrgang 100 (2010) H. 6, S.480-486) ist ein Werkzeugmodul der eingangs genannten Art bekannt, welches eine Spindelschnittstelle für eine Bearbeitungsspindel eines Robotersystems aufweist. Die mechanische Drehbewegung der Bearbeitungsspindel wird im Werkzeugmodul in eine rotatorische Bewegung eines Feinbearbeitungselements umgesetzt, welches eine Poliermembran aufweist. Zur Einstellung einer Anpresskraft oder Normalkraft, mit der das Feinbearbeitungselement auf die zu bearbeitende Werkstückoberfläche gepresst wird, wird mittels einer Pneumatik eine Kraftaktorik betrieben, mit der die Anpresskraft des Feinbearbeitungselements definiert wird. Dies ermöglicht eine automatische Kompensation des Verschleißes des Feinbearbeitungselements oder von Abweichungen des Oberflächenprofils und der Ungenauigkeit der Robotersteuerung. Innerhalb eines Anpresshubes kann über den Luftdruck in der Pneumatik ein weitgehend konstanter Anpressdruck erreicht werden. Das beschriebene Werkzeugmodul wird für die Bearbeitung von Freiformflächen eingesetzt.

Besondere Anforderungen an ein Feinbearbeitungswerkzeug ergeben sich bei tiefen Geometrien, wie z.B. Bohrungen oder schmalen Durchbrüchen. Hierfür können rotierende Feinbearbeitungselemente verwendet werden.

Es sind Entgratspindeln bekannt, bei denen das Feinbearbeitungselement rotierend an der Spitze einer Welle betrieben wird. Eine die Welle antreibende Pneumatikspindel ist im Gehäuse pendelnd aufgehängt, so dass die Welle relativ zum Gehäuse in einem geringen Maße beim Andrücken an ein Werkstück nachgebend eine Schwenkbewegung ausführen kann. Dem Ausweichen des Werkzeuges wirken um die Welle angeordnete Zylinder entgegen, die die Anpresskraft, mit der das Werkzeug in radialer Richtung gegen das Werkstück presst wird, mitbestimmen. Eine derartige Schwenkbewegung der Welle hat den Nachteil, dass das Feinbearbeitungselement relativ zur Oberfläche des Werkstückes verkantet.

Aus der EP 1 386 694 A1 ist ein Werkzeugmodul der eingangs genannten Art bekannt. Dabei sind Verfahren sowie eine Vorrichtung zum Polieren von punktunsymmetrischen Freiformflächen offenbart, wobei ein Polierteller der Vorrichtung in gleicher Drehrichtung rotatorisch angetrieben wird wie die zu polierende optische Fläche. Der Druck in einer Druckkammer des Polierkopfes wird in Abhängigkeit von der Oberflächenkontur der optischen Fläche geregelt, sodass der auf der optischen Oberfläche aufliegende Drehteller auf die optische Fläche einen vorbestimmten Polierdruck ausübt. Die Druckkammer und der Polierteller sind an entgegengesetzten Enden einer Antriebswelle angeordnet, so dass der Druck über die gesamte Antriebswelle wirken muss. Die Antriebswelle ist über Lagerkörper in axialer Richtung verschiebbar angeordnet. Die Poliervorrichtung ist offensichtlich nicht geeignet, auf Werkstückoberflächen zu wirken, die eine bezogen auf die Längsrichtung der Antriebswelle im Wesentlichen parallele Komponente aufweisen.

Aus der DE 10 2012 108 594 A1 ist ein Werkzeugmodul zur Feinbearbeitung bekannt, bei dem ein Werkzeug über eine Exzentereinrichtung an einer Welle angeschlossen ist, welche relativ zu einer Hohlwelle in axialer Richtung verschiebbar ist. Die Exzentereinrichtung übersetzt einen rotatorischen Antrieb mittels einer Spindel in eine lineare Oszillationsbewegung des Werkzeugs. Das Werkzeug ist offensichtlich allein darauf ausgerichtet, auf eine Bearbeitungsfläche einzuwirken, die senkrecht zur Mittellängsachse der Welle ausgerichtet ist. Dementsprechend sind Maßnahmen zur Reaktion auf eine Einwirkung von Kräften, welche bezogen auf die Mittellängsachse der Welle in radialer Richtung wirken, nicht angesprochen.

Die DE 10 2013 219 576 B4 offenbart ein Modul speziell zum Entfernen eines Grats von einem Werkstück, wobei das Modul mit einer bezogen auf eine Längsachse seiner Welle radial wirkenden Kraft das Werkstück bearbeitet. Das Modul kann über einen Kraftsensor an einen Roboterarm angeordnet werden. Das Entgraten erfolgt dabei mittels eines über mehrere Umlenkrollen geführten Seiles, welche sich bei Rotation des Moduls aufgrund der Fliehkraft nach außen gegen das Werkstück wölbt. Die Spannung des Seiles kann über Aufspannungsteller, von denen einer axial verschiebbar ist, beeinflusst werden. Dieselbe Druckschrift offenbart ein alternatives Bearbeitungswerkzeug, welches nicht zum Entgraten mittels Seilen dient sondern mit dem eine Werkzeugoberfläche nach dem Entgraten geschliffen oder poliert werden kann. Es handelt sich dabei um einen elastischen Hohlzylinder, der mit einem Fluid zur Regulierung der Anpresskraft gefüllt werden kann. In beiden Varianten passt sich die Form der Oberfläche des Werkzeuges an die radial wirkende Kraft an.

Es ist nun Aufgabe der Erfindung, ein Werkzeugmodul der eingangs genannten Art zur Verfügung zu stellen, welches einen alternativen Aufbau aufweist und eine andere Bearbeitungsweise, insbesondere mit einer bezogen auf die Längsachse der Feinbearbeitungswelle radialen Krafteinwirkung, ermöglicht.

Diese Aufgabe wird bei einem Werkzeugmodul der eingangs genannten Art mit den kennzeichnenden Merkmalen des Anspruchs 1 gelöst. Vorteilhafte Ausführungsbeispiele sind durch die abhängigen Ansprüche gegeben.

Die Feinbearbeitungswelle ist somit derart im Modulgehäuse gelagert, dass die Feinbearbeitungswelle oder zumindest ein Teil der Feinbearbeitungswelle bei Belastung mit einer radial wirkenden Kraft radial parallel zur Längsachse der Feinbearbeitungswelle verschoben wird.

Bei radial auf die Feinbearbeitungswelle wirkenden Kräften wird somit eine Schwenkbewegung der Feinbearbeitungswelle und damit auch ein Verkanten des Feinbearbeitungselements gegenüber dem Werkstück vermieden. In Vertiefungen, wie zum Beispiel Bohrungen, oder in schmalen Durchbrüchen kann somit das Feinbearbeitungselement in radialer Richtung (bezogen auf die Längsrichtung der Feinbearbeitungswelle) gegen die Oberfläche der Werkstückflanken gepresst werden, ohne dass die Feinbearbeitungswelle relativ zum Werkstück eine Schwenk- oder Kippbewegung ausführt. Somit bleibt die zum Beispiel zylinderförmige Mantelfläche des Feinbearbeitungselements in seiner Orientierung gegenüber der Oberfläche des Werkstückes stabil. Die Kontaktfläche oder Kontaktlinie zwischen Feinbearbeitungselement und Werkstückoberfläche bleibt weitgehend konstant, womit der Verschleiß der Oberfläche des Feinbearbeitungselements wie auch der Abtrag im gesamten Kontaktbereich gleichmäßig bleiben kann.

Das Anpresskraftsystem, mit dem die Anpresskraft des mindestens einen Feinbearbeitungselements bei der Bearbeitung des Werkstücks bestimmt oder zumindest mitbestimmt wird kann zum Beispiel durch ein Fluiddrucksystem mit einem Fluidleitungssystem für ein Fluid sein. Alternativ kann das Anpresskraftsystem auch elektrisch betrieben sein, insbesondere durch ein induktives System.

Das erfindungsgemäße Werkzeugmodul kann so ausgebildet sein, dass die Feinbearbeitungswelle im Modulgehäuse derart gelagert ist, dass die Feinbearbeitungswelle oder zumindest ein Teil der Feinbearbeitungswelle bei einer Belastung mit einer axial wirkenden Kraft axial parallel zur Längsachse der Feinbearbeitungswelle verschoben wird. In diesem Fall sind somit sowohl eine radiale als auch eine axiale Parallelverschiebung der Feinbearbeitungswelle möglich. Die Verschiebung in axialer Richtung kann dabei auch zusätzlich und gleichzeitig zur radialen Verschiebung erfolgen.

Das erfindungsgemäße Werkzeugmodul kann so ausgebildet sein, dass die Feinbearbeitungswelle über mindestens ein auslenkbares, bewegliches Koppelglied angetrieben ist. Dieses Koppelglied ermöglicht einen Versatz aufeinanderfolgender Wellen in radialer Richtung, wobei die aufeinanderfolgenden Wellen parallel zueinander ausgerichtet bleiben können. So ist es möglich, dass eine von einer Antriebseinheit kommende und zum Koppelglied führende Welle, z.B. eine Antriebswelle, in ihrer Orientierung innerhalb des Modulgehäuses unverändert bleiben kann, während eine dem Koppelglied folgende Welle, welche gleichzeitig die Feinbearbeitungswelle sein kann, um einen festgesetzt begrenzten Verschiebeweg parallel verschoben werden kann.

Das Koppelglied kann z.B. als Kardanwelle, biegsame Welle, Balgkupplung oder dergleichen ausgeführt sein.

Die Feinbearbeitungswelle kann im Modulgehäuse mittels eines Wälzlagers, vorzugsweise mittels gegeneinander verspannter Spindellager, gelagert sein. Dabei ist es vorteilhaft, wenn die Lagerung mindestens eine Länge aufweist, die der in Richtung zum Feinbearbeitungswerkzeug gegebenen Auskragungslänge der Feinbearbeitungswelle aus einer das Lager umfassenden Lagerhülse heraus entspricht.

Je nach Anwendungsfall können auch andere Lager verwendet wie zum Beispiel Gleitlager, Magnetlager, Zylinderrollen oder Nadelrollen. Vorteilhaft sind Lager mit einer großen Führungslänge, so dass bereits das Lager einer Kipp- oder Schwenkbewegung der Feinbearbeitungswelle entgegenwirkt.

Damit das Anpresskraftsystem die radial wirkende Anpresskraft des mindestens einen Feinbearbeitungselements auf eine zu bearbeitende Werkstückoberfläche bestimmt oder zumindest mitbestimmt, kann für einen in radialer Richtung auf die Feinbearbeitungswelle wirkenden Anpresshub das Anpresskraftsystem mindestens eine in radialer Richtung auf die Feinbearbeitungswelle wirkende Kraftübertragungseinrichtung vorhanden sein. Bei zwei Kraftübertragungseinrichtungen sind diese vorzugsweise auf einander gegenüberliegenden Seiten der Feinbearbeitungswelle angeordnet.

Wird zum Beispiel die Feinbearbeitungswelle parallel zur Bohrachse in eine Bohrung eingeführt, um die seitlichen Innenwände der Bohrung zu bearbeiten, wird das am Ende der Feinbearbeitungswelle befindliche Feinbearbeitungselement in radialer Richtung gegen die Innenwand gepresst. Durch die Anpresskraft wird die Feinbearbeitungswelle aus einer unbelasteten Mittelposition relativ zum Modulgehäuse parallel verschoben. Hierdurch wirkt die Feinbearbeitungswelle, gegebenenfalls mittelbar, z.B. über die Wellenlagerung, auf mindestens eine Kraftübertragungseinrichtung, welche zwischen der Feinbearbeitungswelle und der Innenwand des Abstützringes angeordnet ist. Die durch die Kraftübertragungseinrichtung übertragene Kraft wirkt einer weiteren Parallelverschiebung der Feinbearbeitungswelle entgegen und definiert somit die Anpresskraft des Feinbearbeitungselements auf die Oberfläche des Werkstückes.

Mehrere Kraftübertragungseinrichtungen können zum Beispiel ringförmig um die Feinbearbeitungswelle herum angeordnet sein. Eine hinreichende Anzahl vorzugsweise gleichmäßig in der Ringform verteilter Kraftübertragungseinrichtungen ermöglicht ein Anpressen des Feinbearbeitungselements an die Werkstückoberfläche in allen radialen Richtungen bezogen auf die Feinbearbeitungswelle. Das Werkzeugmodul muss somit innerhalb einer Bearbeitungszone, zum Beispiel innerhalb einer Bohrung des Werkstückes, nicht ständig bezüglich seiner Längsausrichtung neu orientiert werden.

Wird das Anpresskraftsystem durch ein Fluiddrucksystem gebildet, können die Kraftübertragungsvorrichtungen jeweils ein System aus Zylinder und Kolben umfassen, wobei der Kolben, welcher mit dem Druck des über Fluidkanäle geleiteten Fluids im Zylinder beaufschlagte wird, die radiale Kraft ausübt. Wird das Anpresskraftsystem durch ein induktives System gebildet, wirkt anstelle des druckbeaufschlagten Kolbens ein im Magnetfeld einer Induktionsspule befindlicher Magnetbolzen. Das Werkzeugmodul kann gleichzeitig sowohl das Fluiddrucksystem als auch das elektrisch betriebene Anpresskraftsystem aufweisen.

Des Weiteren kann vorgesehen werden, die Kraftübertragungseinrichtungen derart aufzubauen, dass die Einwirkung der Kraftübertragungseinrichtungen auf die Feinbearbeitungswelle jeweils dann unterbunden wird, wenn die Feinbearbeitungswelle in Wirkrichtung der jeweiligen Kraftübertragungseinrichtungen aus einer unbelasteten Mittelposition heraus parallel verschoben ist oder diese Verschiebung einen Grenzwert überschreitet. Bewegt sich also aufgrund der Parallelverschiebung die Feinbearbeitungswelle aus ihrer unbelasteten Mittelposition heraus von der Kraftübertragungseinrichtung weg, kann letztere nicht mehr auf die Feinbearbeitungswelle wirken. Auf diese Weise wird verhindert, dass einander gegenüberliegende Kraftübertragungseinrichtungen sich in ihrer Wirkung aufheben, wenn beide einander gegenüberliegenden Kraftübertragungseinrichtungen eine radiale Kraft ausüben.

Im Falle eines Fluiddrucksystems mit einer Kolben und Zylinder umfassenden Kraftübertragungseinrichtung, kann der Zylinder einen Anschlag für den Kolben aufweisen, um die Wirkung des Kolbens auf die Feinbearbeitungswelle zu unterbinden, sobald die Feinbearbeitungswelle sich mit einer bestimmten möglichst gegen Null gehenden radialen Parallelverschiebung über die unbelastete Mittellage hinaus von der Kraftübertragungseinrichtung entfernt. Entsprechendes gilt für ein induktives System, bei dem z.B. die Bewegungsmöglichkeit des Magnetbolzens mechanisch eingeschränkt wird oder die Stromzufuhr zum geeigneten Zeitpunkt unterbrochen wird.

Für die komplette Bearbeitung von tiefen und engen Geometrien ist es oft notwendig, die Grundfläche und die Übergangsbereiche zu den Wänden zu bearbeiten. Dafür kann es vorteilhaft sein, das erfindungsgemäße Werkzeugmodul so auszubilden, dass für einen in axialer Richtung der Feinbearbeitungswelle wirkenden Anpresshub des mindestens einen Feinbearbeitungselements die Feinbearbeitungswelle eine in axialer Richtung wirkende Kraftübertragungseinrichtung aufweist.

Im Falle eines Fluiddrucksystems können zur Realisierung der Kraftübertragungseinrichtung in der Feinbearbeitungswelle eine Zylinderbohrung und ein Axialkolben vorgesehen sein, der eine axiale Anpresskraft des Feinbearbeitungselementes bestimmt oder zumindest mitbestimmt. Die axiale Kraftübertragungseinrichtung wird über einen vorzugsweise durch die Feinbearbeitungswelle laufenden Fluidkanal angesteuert. Eine entsprechende Lösung gibt es bei einem induktiven System mit Induktionsspule und Magnetkolben in der Feinbearbeitungswelle und z.B. einem vorzugsweise in einem Hohlkanal der Feinbearbeitungswelle geführten elektrischen Kabel.

Axiale und radiale wirkende Kraftübertragungseinrichtungen können kombiniert werden, wobei für die Bearbeitung auch resultierende Anpresskräfte in 0° (reine axiale Anpressung) bis 90°(reine radiale Anpressung) erzeugt werden können.

Im Falle des Fluiddrucksystems kann die axiale Kraftübertragungseinrichtung abhängig vom eingesetzten Koppelglied und den Eigenschaften der zu nutzenden Spindel z.B. zentral über die Spindelwelle, Antriebswelle und Koppelglied oder über einen aus dem Spindelgehäuse kommenden zusätzlichen seitlichen Fluidkanal mit Fluiddruck angesteuert werden.

Die axiale Kraftübertragungseinrichtung besitzt entsprechend den radialen Kraftübertragungseinrichtungen einen Anstellhub, innerhalb dessen bei konstantem Fluiddruck (bei einem Fluiddrucksystem) bzw. konstanter Leistungsaufnahme der Spule (bei einem induktiven System) die Anpresskraft konstant ist.

Der Druck im Fluiddrucksystem bzw. die auf einen Magnetbolzen eines induktiven Systems wirkende Kraft kann über geeignete Einrichtungen geregelt oder gesteuert werden.

Vorteilhafte Ausführungsbeispiele der Erfindungen werden im Folgenden anhand von Figuren dargestellt.

Es zeigt
- Fig. 1:: ein erstes Werkzeugmodul mit radial wirkenden Kraftübertragungseinrichtungen,
- Fig. 2:: ein vergrößerter Ausschnitt aus Fig. 1 betreffend die Kraftübertragungseinrichtungen,
- Fig. 3:: ein zweites Werkzeugmodul mit radial und mit axial wirkenden Kraftübertragungseinrichtungen
- Fig. 4:: das vordere Ende der Feinbearbeitungswelle des zweiten Werkzeugmoduls in vergrößerter Darstellung und
- Fig. 5:: ein drittes Werkzeugmodul mit radial und mit axial wirkenden Kraftübertragungseinrichtungen.

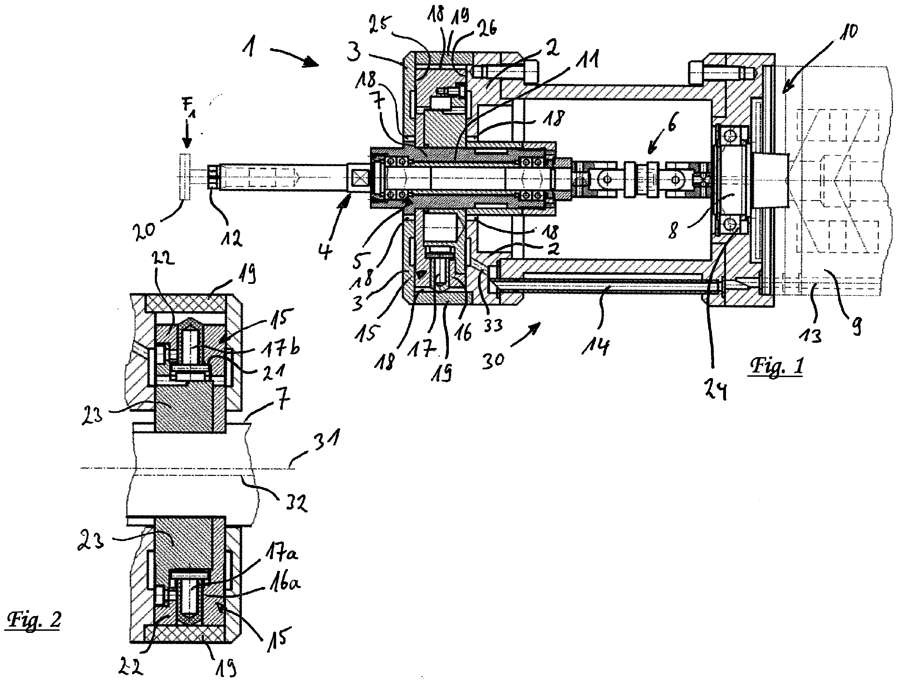

Fig. 1 zeigt im Querschnitt ein erstes Werkzeugmodul 1 mit einem aus mehreren Teilen bestehenden Modulgehäuse 30 und einer Feinbearbeitungswelle 4. Die Feinbearbeitungswelle 4 ist in einer Lagerhülse 7 von einem Distanzring 11 umgeben und mit mindestens einem Wälzlager 5 in Form eines gegeneinander verspannten Spindellagers drehbar gelagert. Die Feinbearbeitungswelle 4 ist mittels eines beweglichen Koppelglieds 6, hier als Kardanwelle ausgebildet, an einer im Wälzlager 24 gelagerten Antriebswelle 8 angeschlossen, welche eine Schnittstelle, zum Beispiel in Form eines HSK-Anschlusses, zu einer hier nur gestrichelt angedeuteten Spindel 9 einer Maschine oder eines Roboters, aufweist. Die Spindel 9 greift in die Aufnahme 10 des Werkzeugmoduls 1. Über die Antriebswelle 8 und dem beweglichen Koppelglied 6 wird mittels der Spindel 9 die Feinbearbeitungswelle 4 rotierend angetrieben.

Am vorderen Ende der Feinbearbeitungswelle 4 ist eine Spannvorrichtung 12 zur Fixierung eines Feinbearbeitungselements 20 vorhanden. Das Feinbearbeitungselement 20 kann zum Beispiel zylinderförmig sein, wobei der Zylindermantel zur Bearbeitung einer hier nicht dargestellten Werkstückoberfläche dient.

Über einen hier verdeckt dargestellten Fluidkanal 13 in der Spindel 9, einen Fluidkanal 14 am Modulgehäuse 30 und einen weiteren Fluidkanal 33 in einer oberen Gleitplatte 2 ist für ein Fluid, z.B. Druckluft, eine Verbindung zu einer Führungsplatte 15 gegeben, welche ringförmig um die Lagerhülse 7 herum angeordnet und an dieser fixiert ist. Die Führungsplatte 15 weist mehrere Zylinder 16 mit Kolben 17 auf, wobei jedes Paar aus Zylinder 16 und Kolben 17 eine Kraftübertragungseinrichtung bildet. Die Kolben 17 und Zylinder 16 sind ringförmig in der Führungsplatte 15 um die in der Lagerhülse 7 gelagerte Feinbearbeitungswelle 4 herum mit gleichmäßigen Abständen angeordnet. Die Führungsplatte 15 mitsamt der in der Lagerhülse 7 gelagerten Feinbearbeitungswelle 4 lässt sich, zwischen einer ersten Gleitfläche 25 einer unteren Gleitplatte 3 und einer zweiten Gleitfläche 26 der oberen Gleitplatte 2 geführt, in beliebiger radialer Richtung parallel verschieben. Die Strecke der maximalen Parallelverschiebung wird durch ringförmige Spalte 18 begrenzt, die in Fig. 1 zwischen der Führungsplatte 15 und einem Abstützring 19 herum sowie angrenzend an die Lagerhülse 7 zu sehen sind. Die Führungsplatte 15 und damit die Feinbearbeitungswelle wird durch die mit Fluiddruck beaufschlagten Kolben 17 und Zylinder 16 im unbelasteten Zustand stabil in einer Mittellage gehalten. Die Führungsplatte ist aus einem ersten Führungsplattenteil 22 und einem zweiten Führungsplattenteil 23 zusammengesetzt (siehe Fig. 2).

Fig. 2 zeigt vergrößert einen Ausschnitt des Werkzeugmoduls 1 im Bereich der Führungsplatte 15, wobei das Innere der Lagerhülse 7 nicht gezeigt ist. Zur Erläuterung der Funktionsweise wird eine beispielhafte Einsatzsituation des Werkzeugmoduls 1 dargestellt. Bei der Bearbeitung einer sich parallel zur Feinbearbeitungswelle 4 und senkrecht zur Zeichnungsebene erstreckenden und oberhalb der Feinbearbeitungswelle 4 angeordneten, hier nicht dargestellten Werkstückwand wirkt auf das Feinbearbeitungselement 20 eine Kraft F₁ in Richtung des entsprechend gekennzeichneten Pfeils (siehe Fig. 1). Diese Kraft F₁ bewirkt eine Parallelverschiebung der Feinbearbeitungswelle 4 mitsamt der Führungsplatte 15 in Richtung der Kraft F₁. Im dem Zylinder 16a, der in Fig. 1 und 2 unten dargestellt ist, presst der gegebene Druck des Fluids den Kolben 17a gegen die Innenseite des Abstützringes 19, wirkt der Kraft F₁ entgegen und definiert damit die Anpresskraft, mit der das dargestellte Feinbearbeitungselement 20 gegen das nicht dargestellte Werkstück, z.B. gegen eine zu bearbeitende Wand einer Bohrung, presst. Letzteres ist deshalb möglich, weil auf der dem hier dargestellten Kolben17a gegenüberliegenden Seite im Belastungsfall der Kolben 17b auf die gegenüberliegende Wand des Abstützringes 19 nicht einwirken kann. Der Kolben 17b hat den Kontakt zur Wand des Abstützringes 19 verloren, da ein Anschlag 21 des Kolbens 17b an einem Gegenanschlag in der Wandung der Führungsplatte 15 anliegt. Jeder der Kolben 17 verliert in dem Moment den Kontakt zur Wand des Abstützringes 19, wenn sich die Feinbearbeitungswelle 3 mit ihrer Mittellängsachse 32 mit einer Bewegungskomponente in Längsrichtung des Kolbens 17 von der Wand des Abstützringes 19 weg aus der unbelasteten Mittellage 31 heraus parallel verschiebt (siehe Fig. 2).

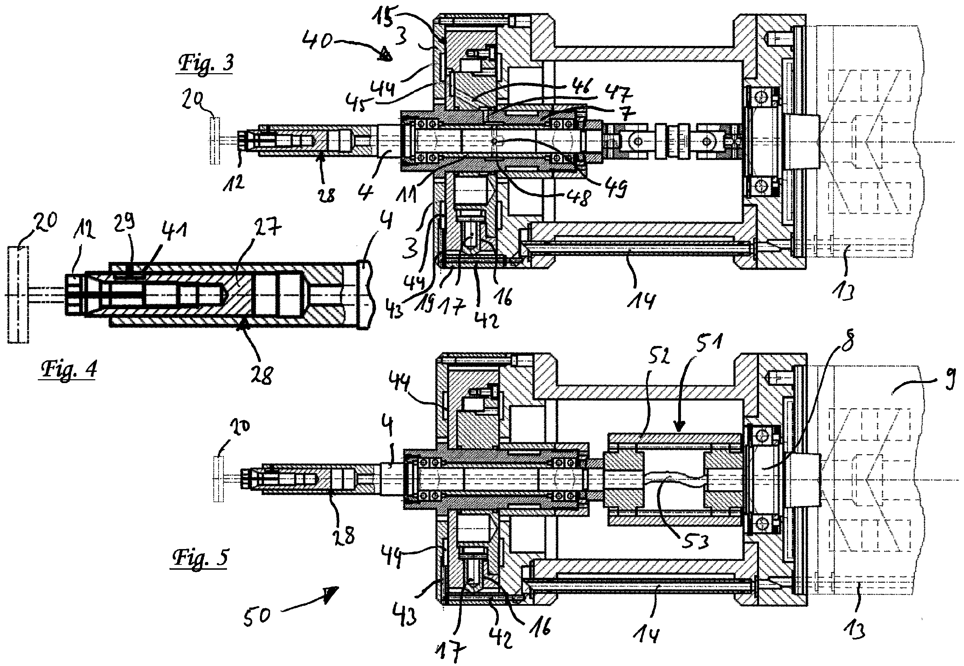

Fig. 3 zeigt ein zweites Werkzeugmodul 40, das ähnlich dem ersten Werkzeugmodul 1 (Fig. 1 und 2) aufgebaut ist. Gleiche Bezugszeichen bedeuten daher einander entsprechende Bauteile, zu denen auf die Beschreibung zu den Fig. 1 und 2 verwiesen wird. Im Folgenden werden lediglich die für die Erfindung wichtigen Unterschiede dargestellt. Das zweite Werkzeugmodul 40 weist zusätzlich zu radial wirkenden Zylinder 16 und Kolben 17 aufweisenden Kraftübertragungseinrichtungen eine in axialer Richtung einer Feinbearbeitungswelle 4 wirkende Kraftübertragungseinrichtung auf, welche durch einen in diese Feinbearbeitungswelle 4 eingebrachten Axialzylinder 28 und einen darin angeordneten Axialkolben 27 realisiert ist. Fig. 4 zeigt das vordere Ende der Feinbearbeitungswelle 4 vergrößert. Am Kolben 27 ist eine Spannvorrichtung 12 für das Feinbearbeitungselement 20 fixiert. Der Kolben 27 weist eine den maximalen axialen Verfahrweg definierende Nut 41 auf, in die ein an der Wand des Axialzylinders 28 angeordneter Anschlagsstift 29 eingreift.

Zur Versorgung des Zylinders 28 mit einem Fluid wird wie auch für die radial ausgerichteten Zylinder 16 ein weiterer Fluidkanal 14 außen am Modulgehäuse 30 genutzt. Mit diesem Fluidkanal 14 verbunden ist ein weiterer Fluidkanal 42, welcher durch den Abstützring 19 hindurch zu einem weiteren Fluidkanal 43 in der unteren Gleitplatte 3 führt. Der Fluidkanal 43 der unteren Gleitplatte 3 mündet schließlich in einen Ringkanal 44, welcher von einer Nut in der unteren Gleitplatte 3 sowie von der Führungsplatte 15 begrenzt ist. Der Ringkanal 44 ist schließlich über weitere Fluidkanäle 45 und 46 in der Führungsplatte 15 sowie Fluidkanal 47 in der Wand der Lagerhülse 7 mit einer Ringnut 48 verbunden, der über Öffnungen 54 im Distanzring und Öffnungen 49 in der Wand der Feinbearbeitungswelle 4 das Innere der Feinbearbeitungswelle 4 mit dem Fluid versorgt. Über die Feinbearbeitungswelle 4 breitet sich das Fluid bis zum Axialzylinder 28 aus.

Fig. 5 zeigt ein drittes beispielhaftes Werkzeugmodul 50, das ähnlich dem zweiten Werkzeugmodul 40 (Fig. 3 und 4) aufgebaut ist. Gleiche Bezugszeichen bedeuten daher einander entsprechende Bauteile, zu denen auf die Beschreibung zu Fig. 3 und 4 verwiesen wird. Im Folgenden werden lediglich die für die Erfindung wichtigen Unterschiede dargestellt. Das zweite Werkzeugmodul 40 und das dritte Werkzeugmodul 50 sind hinsichtlich der Ausbildung des vorderen Endes der Feinbearbeitungswelle 4 identisch, weshalb die in Fig. 4 gegebene vergrößerte Darstellung auch für das dritte Werkzeugmodul 50 gilt.

Im dritten Werkzeugmodul 50 ist das bewegliche Koppelglied zur Verbindung zwischen Feinbearbeitungswelle 4 und Antriebswelle 8 über eine Zahnradkupplung 51 gebildet, die mit einem beweglichen Kopplungsglied 52 radiale Parallelverschiebungen der Feinbearbeitungswelle 4 zulässt und zudem Raum für eine flexible Leitung 53 lässt, über die das Fluid aus einem inneren Hohlraum einer hier nicht dargestellten Spindelwelle der Spindel 9 und der Antriebswelle heraus der Feinbearbeitungswelle 4 bis zum Axialzylinder 28 gelangt.

Die Fluidkanäle 13, 14, 42 und 43 sowie der Ringkanal 44 sind ebenso angeordnet wie im zweiten Werkzeugmodul 40, versorgen hier jedoch allein die Zylinder 16 und die Kolben 17 mit dem Fluid.

In den beispielhaft dargestellten Werkzeugmodulen 1, 40 und 50 können alternative Wege für die Fluidkanalverläufe und alternative Lagerungen für die Feinbearbeitungswelle 4 oder alternative Koppelglieder vorgesehen werden.

**Bezugszeichenliste**

| | | | |
|---|---|---|---|
| 1 | Erstes Werkzeugmodul | 30 | Modulgehäuse |
| 2 | obere Gleitplatte | 31 | Unbelastete Mittellage |
| 3 | untere Gleitplatte | 32 | Mittellängsachse |
| 4 | Feinbearbeitungswelle | 33 | Fluidkanal |
| 5 | Wälzlager | 40 | Zweites Werkzeugmodul |
| 6 | Koppelglied | 41 | Nut |
| 7 | Lagerhülse | 42 | Fluidkanal |
| 8 | Antriebswelle | 43 | Fluidkanal |
| 9 | Spindel | 44 | Ringkanal |
| 10 | Aufnahme für Spindel | 45 | Fluidkanal |
| 11 | Distanzring | 46 | Fluidkanal |
| 12 | Spannvorrichtung | 47 | Fluidkanal |
| 13 | Fluidkanal | 48 | Ringnut |
| 14 | Fluidkanal | 50 | Drittes Werkzeugmodul |
| 15 | Führungsplatte | 51 | Zahnradkupplung |
| 16 | Zylinder | 52 | Kopplungsglied |
| 17 | Kolben | 53 | Flexible Leitung |
| 18 | Spalt | 54 | Öffnungen |
| 19 | Abstützring | | |
| 20 | Feinbearbeitungselement | | |
| 21 | Anschlag | | |
| 22 | Erstes Führungsplattenteil | | |
| 23 | Zweites Führungsplattenteil | | |
| 24 | Wälzlager | | |
| 25 | Erste Gleitfläche | | |
| 26 | Zweite Gleitfläche | | |
| 27 | Axialkolben | | |
| 28 | Axialzylinder | | |
| 29 | Anschlagsstift | | |

## Patentansprüche

1. Werkzeugmodul zur Feinbearbeitung, umfassend
a) eine in einem Modulgehäuse (30) gelagerte Feinbearbeitungswelle (4) mit mindestens einem Feinbearbeitungselement (20) oder mit Mitteln zur Fixierung mindestens eines Feinbearbeitungselements (20), und
b) mindestens ein Anpresskraftsystem zur Beeinflussung einer Anpresskraft des mindestens einen Feinbearbeitungselements (20) auf eine zu bearbeitende Werkstückoberfläche,
wobei
c) die Feinbearbeitungswelle (4) derart im Modulgehäuse (30) gelagert ist, dass die Feinbearbeitungswelle (4) oder zumindest ein Teil der Feinbearbeitungswelle (4) bei Belastung mit einer radial wirkenden Kraft radial parallel zur Längsachse (32) der Feinbearbeitungswelle (4) verschoben wird und
d) eine Maschinen-Schnittstelle zum Anschluss an eine Maschine, insbesondere eine Werkzeugmaschine oder einen Roboter, vorhanden ist,
**dadurch gekennzeichnet, dass**
e) die Maschinen-Schnittstelle zum Antrieb der Feinbearbeitungswelle (4) durch eine Spindel (9) eingerichtet ist.

2. Werkzeugmodul nach Anspruch 1, **dadurch gekennzeichnet, dass** die Feinbearbeitungswelle (4) derart im Modulgehäuse (30) gelagert ist, dass die Feinbearbeitungswelle (4) oder zumindest ein Teil der Feinbearbeitungswelle (4) bei Belastung mit einer axial wirkenden Kraft axial parallel zur Längsachse (32) der Feinbearbeitungswelle (4) verschoben wird.

3. Werkzeugmodul nach Anspruch 1 oder 2, **dadurch gekennzeichnet, dass** die Feinbearbeitungswelle (4) über mindestens ein auslenkbares, bewegliches Koppelglied (6, 51) angetrieben ist.

4. Werkzeugmodul nach einem der vorhergehenden Ansprüche, **dadurch gekennzeichnet, dass** die Feinbearbeitungswelle (4) innerhalb des Modulgehäuses (30) mittels mindestens eines Wälzlagers (5) gelagert ist.

5. Werkzeugmodul nach einem der vorherigen Ansprüche, **dadurch gekennzeichnet, dass** das Anpresskraftsystem für einen in radialer Richtung auf die Feinbearbeitungswelle (4) wirkenden Anpresshub mindestens eine in radialer Richtung wirkende Kraftübertragungseinrichtung aufweist.

6. Werkzeugmodul nach Anspruch 5, **dadurch gekennzeichnet, dass** die mindestens eine Kraftübertragungseinrichtung derart eingerichtet ist, dass die Einwirkung der mindestens einen Kraftübertragungseinrichtung auf die Feinbearbeitungswelle (4) jeweils dann unterbunden ist, wenn die Feinbearbeitungswelle (4) in Rückstellrichtung der jeweiligen Kraftübertragungseinrichtung aus einer unbelasteten Mittelposition (31) parallel verschoben ist oder diese Verschiebung einen Grenzwert überschreitet.

7. Werkzeugmodul nach einem der vorhergehenden Ansprüche, **dadurch gekennzeichnet, dass** für einen in axialer Richtung der Feinbearbeitungswelle (4) wirkenden Anpresshub des mindestens einen Feinbearbeitungselements (4) die Feinbearbeitungswelle (4) eine in axialer Richtung wirkende Kraftübertragungseinrichtung aufweist.

8. Werkzeugmodul nach einem der vorhergehenden Ansprüche, **gekennzeichnet durch** einen Antriebsmotor zum Antrieb der Feinbearbeitungswelle.

9. Werkzeugmodul nach einem der vorherigen Ansprüche, **dadurch gekennzeichnet, dass** das Anpresskraftsystem ein Fluiddrucksystem mit einem Fluidleitungssystem für ein Fluid umfasst.

10. Werkzeugmodul nach Anspruch 9 mit Rückbezug auf Anspruch 5, **dadurch gekennzeichnet, dass** die Kraftübertragungseinrichtungen jeweils ein Kolben-Zylinder-System umfassen.

11. Werkzeugmodul nach Anspruch 10 mit Rückbezug auf Anspruch 6, **dadurch gekennzeichnet, dass** zur Unterbindung der Einwirkung der mindestens einen Kraftübertragungseinrichtung auf die Feinbearbeitungswelle im Sinne des Anspruchs 6 im jeweiligen Zylinder (16) ein Anschlag (21) für den Kolben (17) vorhanden ist.

12. Werkzeugmodul nach einem der Ansprüche 1 bis 8, **dadurch gekennzeichnet, dass** das Anpresskraftsystem elektrisch betrieben ist.

13. Werkzeugmodul nach Anspruch 12 mit Rückbezug auf Anspruch 5, **dadurch gekennzeichnet, dass** die mindestens eine Kraftübertragungseinrichtung induktiv wirkend ist.

## Claims

1. Tool module for finishing, comprising
a) a finishing shaft (4) mounted in a module housing (30) with at least one finishing element (20) or with means for fixing at least one finishing element (20), and
b) at least one contact pressing force system for influencing a contact pressing force from the at least one finishing element (20) on a workpiece surface to be worked, wherein
c) the finishing shaft (4) is mounted in the module housing (30) in such a way that the finishing shaft (4) or at least a part of the finishing shaft (4) is shifted radially in parallel to the longitudinal axis (32) of the finishing shaft (4) when loaded with a radially acting force and
d) a machine interface is provided for connection to a machine, in particular a machine tool or a robot,
**characterized in that**
e) the machine interface is set up to drive the finishing shaft (4) by a spindle (9).

2. Tool module according to claim 1, **characterized in that** the finishing shaft (4) is mounted in the module housing (30) in such a way that the finishing shaft (4) or at least part of the finishing shaft (4) is shifted axially in parallel to the longitudinal axis (32) of the finishing shaft (4) when loaded with an axially acting force.

3. Tool module according to claim 1 or 2, **characterized in that** the finishing shaft (4) is driven via at least one deflectable, movable coupling member (6, 51).

4. Tool module according to one of the preceding claims, **characterized in that** the finishing shaft (4) is mounted within the module housing (30) by means of at least one roller bearing (5).

5. Tool module according to one of the preceding claims, **characterized in that** the contact pressing force system has at least one force transmission device acting in the radial direction for a contact pressure stroke acting in the radial direction on the finishing shaft (4).

6. Tool module according to claim 5, **characterized in that** the at least one force transmission device is set up in such a way that the action of the at least one force transmission device on the finishing shaft (4) is prevented in each case when the finishing shaft (4) is shifted in parallel in the return direction of the respective force transmission device from an unloaded middle position (31) or this shift exceeds a limit value.

7. Tool module according to one of the preceding claims, **characterized in that** for a contact pressure stroke of the at least one finishing element (4) acting in the axial direction of the finishing shaft (4), the finishing shaft (4) has a force transmission device acting in the axial direction.

8. Tool module according to one of the preceding claims, **characterized by** a drive motor for driving the finishing shaft.

9. Tool module according to one of the preceding claims, **characterized in that** the contact pressing force system comprises a fluid pressure system with a fluid conduit system for a fluid.

10. Tool module according to claim 9 when dependent on claim 5, **characterized in that** the force transmission devices each comprise a piston-cylinder system.

11. Tool module according to claim 10 with reference to claim 6, **characterized in that**, in order to prevent the at least one force transmission device from acting on the fine machining shaft within the meaning of claim 6, a stop (21) for the piston (17) is present in the respective cylinder (16).

12. Tool module according to one of claims 1 to 8, **characterized in that** the contact pressing force system is operated electrically.

13. Tool module according to claim 12 with reference back to claim 5, **characterized in that** the at least one force transmission device is inductively acting.

## Revendications

1. Module d'outil destiné à la finition, comprenant
a) un arbre de finition (4) monté dans un boîtier de module (30) et comportant au moins un élément de finition (20) ou comportant des moyens de fixation d'au moins un élément de finition (20), et
b) au moins un système de force de pression de contact permettant d'influencer une force de pression de contact de l'au moins un élément de finition (20) sur une surface de pièce à usiner,
dans lequel
c) l'arbre de finition (4) est monté dans le boîtier de module (30) de telle sorte que l'arbre de finition (4) ou au moins une partie de l'arbre de finition (4) est déplacé radialement en parallèle à l'axe longitudinal (32) de l'arbre de finition (4) lorsqu'il est chargé d'une force agissant radialement et
d) une interface machine permettant le raccord à une machine, en particulier à une machine-outil ou à un robot, est présente,
**caractérisé en ce que**
e) l'interface machine est conçue pour entraîner l'arbre de finition (4) par une broche (9).

2. Module d'outil selon la revendication 1, **caractérisé en ce que** l'arbre de finition (4) est monté dans le boîtier de module (30) de telle sorte que l'arbre de finition (4) ou au moins une partie de l'arbre de finition (4) est déplacé axialement en parallèle à l'axe longitudinal (32) de l'arbre de finition (4) lorsqu'il est chargé d'une force agissant axialement.

3. Module d'outil selon la revendication 1 ou 2, **caractérisé en ce que** l'arbre de finition (4) est entraîné par au moins un membre d'accouplement déviable et mobile (6, 51).

4. Module d'outil selon l'une des revendications précédentes, **caractérisé en ce que** l'arbre de finition (4) est monté à l'intérieur du boîtier de module (30) au moyen d'au moins un palier à roulement (5).

5. Module d'outil selon l'une des revendications précédentes, **caractérisé en ce que** le système de force de pression de contact présente au moins un dispositif de transmission de force agissant dans la direction radiale pour une course de pression de contact agissant sur l'arbre de finition (4) dans la direction radiale.

6. Module d'outil selon la revendication 5, **caractérisé en ce que** l'au moins un dispositif de transmission de force est conçu de telle sorte que l'action de l'au moins un dispositif de transmission de force sur l'arbre de finition (4) est empêchée respectivement lorsque l'arbre de finition (4) est déplacé en parallèle dans la direction de retour du dispositif de transmission de force respectif à partir d'une position centrale non chargée (31) ou lorsque ledit déplacement dépasse une valeur limite.

7. Module d'outil selon l'une des revendications précédentes, **caractérisé en ce que** pour une course de pression de contact de l'au moins un élément de finition (4) agissant dans la direction axiale de l'arbre de finition (4), l'arbre de finition (4) présente un dispositif de transmission de force agissant dans la direction axiale.

8. Module d'outil selon l'une des revendications précédentes, **caractérisé par** un moteur d'entraînement permettant d'entraîner l'arbre de finition.

9. Module d'outil selon l'une des revendications précédentes, **caractérisé en ce que** le système de force de pression de contact comprend un système de pression de fluide comportant un système de conduite de fluide destiné à un fluide.

10. Module d'outil selon la revendication 9 en référence à la revendication 5, **caractérisé en ce que** les dispositifs de transmission de force comprennent respectivement un système piston-cylindre.

11. Module d'outil selon la revendication 10 en référence à la revendication 6, **caractérisé en ce qu'**une butée (21) destinée au piston (17) est présente dans le cylindre respectif (16) afin d'empêcher l'action de l'au moins un dispositif de transmission de force sur l'arbre de finition conformément à la revendication 6.

12. Module d'outil selon l'une des revendications 1 à 8, **caractérisé en ce que** le système de force de pression de contact est actionné électriquement.

13. Module d'outil selon la revendication 12 en référence à la revendication 5, **caractérisé en ce que** l'au moins un dispositif de transmission de force agit de manière inductive.
